# EUROPÄISCHE PATENTSCHRIFT

(11) **EP 4 544 357 B1**
(45) Veröffentlichungstag und Bekanntmachung des Hinweises auf die Patenterteilung: **07.10.2026**
(21) Anmeldenummer: 23733962.7
(22) Anmeldetag: 20.06.2023
(51) Int. Cl.: G03H 1/02, B32B 17/06, G03H 1/20

(54) **MASTERPLATTE ZUR HOLOGRAMMREPLIKATION**
MASTER PLATE FOR HOLOGRAM REPLICATION
PLAQUE MAÎTRESSE POUR RÉPLICATION D'HOLOGRAMME

(30) Priorität: 22.06.2022 DE 102022206277
(43) Veröffentlichungstag der Anmeldung: 30.04.2025
(73) Patentinhaber: Carl Zeiss Jena GmbH, 07745 Jena (DE)
(72) Erfinder: SCHWEDAT, Stefan, 07745 Jena (DE); BRUENNER, Nadin, 07745 Jena (DE); STAMMER, Jeanette, 07745 Jena (DE); ZDZIAREK, Justyna, 07745 Jena (DE); ACKERMANN, Lisa, 07745 Jena (DE)
(74) Vertreter: Leifgen, Matthias
(86) Internationale Anmeldenummer: PCT/EP2023/066661
(87) Internationale Veröffentlichungsnummer: WO 2023/247554

(56) Entgegenhaltungen:
- JP-A- 2009 300 997
- JP-A- H11 212 436
- JP-A- H11 249 535
- US-A- 4 367 911
- US-A1- 2007 187 947

## Beschreibung

Die Erfindung betrifft in einem ersten Aspekt eine Masterplatte für eine industrielle Hologrammreplikation, umfassend unter anderem eine ebene und flächige Verbundscheibe mit einer dicken Glasscheibe als Träger zur Minimierung der Durchbiegung der Masterplatte und einer dünnen Glasscheibe zum Schutz einer Masterhologrammschicht vor mechanischen Einflüssen sowie mindestens einer zwischen den Glasscheiben liegenden Masterhologrammschicht, welche die optische Funktion eines Hologramms beinhaltet, wobei die dicke Glasscheibe eine Dicke senkrecht zur flächigen Ausdehnung größer als 2 Millimeter aufweist, wobei die dünne Glasscheibe eine Dicke senkrecht zur flächigen Ausdehnung zwischen 2 Millimetern und 0,1 Millimetern aufweist und wobei eine Unebenheit der Verbundscheibe vorzugsweise kleiner ist als 0,03 % einer Länge einer Ausdehnungsrichtung der Fläche der flächigen Verbundscheibe.

In einem zweiten Aspekt betrifft die Erfindung ein Herstellungsverfahren für eine Masterplatte.

### Hintergrund und Stand der Technik

Technische Hologramme können durch diverse holografische Verfahren direkt aufgenommen oder mit Hilfe von Wellenfrontdruckern aus computergenerierten Daten gedruckt werden. Für eine Massenfertigung anspruchsvoller optischer Funktionen eignen sich diese Herstellungsverfahren, wegen des hohen Zeitaufwandes jedoch nicht. Hierfür bieten sich geeignete Replikationsverfahren an.

Ein wichtiges Replikationsverfahren für Hologramme entspricht dem technisch bekannten Verfahren von Kontaktkopien. Dabei wird direkt auf das so genannte Masterhologramm ein zweites photosensitives Material aufgebracht. Durch gleichzeitiges Belichten des photosensitiven Materials und des Masterhologramms mit ausreichend kohärentem Licht, wird die optische Funktion des Masters in Form eines Hologramms in das zweite photosensitive Material übertragen, wodurch eine Kopie des Masterhologramms erzeugt wird.

Ein solches Verfahren wird bspw. in der DE 19809503 A1 und in der WO 2008145077 A1 beschrieben.

In der EP 0919961 B1 wird ein Oberflächenrelief als Master für das Erstellen eines Sicherheitshologramms verwendet.

Um diesen Prozess serientauglich zu gestalten, muss das Masterhologramm gegen mechanische Einflüsse geschützt werden. Dies ist am einfachsten zu erreichen, wenn das Masterhologramm zwischen Glasplatten (Quarzglas, Floatglas, Natriumsilikatglas oder ähnlichem) eingebettet wird. Die optische Qualität der durch das Kopieren erzeugten Hologramme ist dabei wesentlichen vom Abstand (der Länge des optischen Wegs) zwischen Masterhologramm und dem zweiten photosensitiven Material abhängig, je kleiner der Abstand umso genauer wird die optische Funktion des Masterhologramms kopiert. Bei einem Abstand gleich Null, sind die optischen Funktionen identisch. Mit größer werdendem Abstand engt sich unter anderem das Winkelspektrum der kopierten optischen Funktion ein.

JP 2006349874 A beschreibt ein Masterstack mit zwei Transmissionshologrammen, welche auf ein Glassubstrat laminiert werden.

Auch in der US 6097514 wird mindestens ein photosensitives Material auf ein Glassubstrat aufgebracht.

Damit der Kopierprozess serientauglich und automatisiert erfolgen kann, müssen die Masterhologramme zwischen hinreichend großformatigen Glasscheiben integriert werden, wobei die Glasverbunde mit den innenliegenden Masterhologrammen vorteilhafterweise folgende Bedingungen erfüllt:
1. Eine möglichst geringe Durchbiegung während des gesamten Kopierprozesses (vorteilhafterweise weniger als 500 µm pro Meter Kantenlänge der Glasscheiben).
2. Eine möglichst geringe Welligkeit auf der Glasoberfläche.
3. Eine Dickenschwankung von maximal 2 % (vorteilhafterweise weniger als 250 µm pro Meter Kantenlänge der Glasscheiben).
4. Im Hologrammbereich keine mit bloßem Auge sichtbaren Einschlüsse aus Luft oder Partikeln.

Für das Erfüllen dieser Anforderungen, insbesondere für Scheibenformate ab 0,25 bis ca. 2 m² Fläche während des Fertigungsprozesses sind im Stand der Technik keine zuverlässigen und praktischen Verfahren und auch keine Masterhologramme bekannt.

### Aufgabe der Erfindung

Es ist eine Aufgabe der Erfindung, ein Masterhologramm sowie ein Verfahren zur Herstellung eines Masterhologramms ohne die Nachteile des Standes der Technik bereitzustellen. Insbesondere ist es eine Aufgabe der Erfindung, eine Masterplatte sowie ein besonders zuverlässiges, effizientes und kostengünstiges Herstellungsverfahren einer solchen Masterplatte bereitzustellen, wobei die Masterplatte eine besonders zuverlässige und fehlerfreie Hologrammkopie ermöglicht und für die Herstellung besonders hochwertiger Hologramme geeignet ist, welche eine optische Funktion mit einem großen Winkelspektrum aufweisen können.

### Zusammenfassung der Erfindung

Die Aufgabe wird durch die Merkmale der unabhängigen Ansprüche gelöst. Bevorzugte Ausführungsformen der Erfindung sind in den abhängigen Ansprüchen beschrieben.

In einem ersten Aspekt betrifft die Erfindung eine Masterplatte für eine industrielle Hologrammreplikation, umfassend unter anderem eine ebene und flächige Verbundscheibe mit einer dicken Glasscheibe als Träger zur Minimierung der Durchbiegung der Masterplatte und einer dünnen Glasscheibe zum Schutz einer Masterhologrammschicht vor mechanischen Einflüssen sowie mindestens einer zwischen den Glasscheiben liegenden Masterhologrammschicht, welche die optische Funktion eines Hologramms beinhaltet und/oder geeignet ist, diese zu beinhalten. Die Masterplatte ist dadurch gekennzeichnet, dass die dicke Glasscheibe eine Dicke senkrecht zur flächigen Ausdehnung größer als 2 Millimeter aufweist, die dünne Glasscheibe eine Dicke senkrecht zur flächigen Ausdehnung zwischen 2 Millimetern und 0,1 Millimetern aufweist und eine Unebenheit der Verbundscheibe bevorzugt kleiner ist als 0,03 % einer Länge einer Ausdehnungsrichtung der Fläche der flächigen Verbundscheibe.

Die industrielle Hologrammreplikation umfasst bevorzugt die Hologrammreplikation in industrieller Massenfertigung.

Eine Verbundscheibe gemäß der beanspruchten Erfindung umfasst mindestens zwei Glasscheiben und mindestens eine Zwischenschicht.

Flächig bedeutet dabei insbesondere eine breitere Fläche bildend, abgeflacht und/oder sich auf einer Fläche ausdehnend. Flächig kann beispielsweise bedeuten, dass die Scheibe eine große Ausdehnung entlang einer Ebene oder Fläche aufweist und eine verhältnismäßig deutlich kleinere Ausdehnung in einer hierzu senkrechten Richtung. Deutlich kleinere Ausdehnung bedeutet vorzugsweise eine um mindestens einen Faktor zwei kleinere Ausdehnung als die kleinste Ausdehnung entlang der Fläche oder Ebene.

Die Masterhologrammschicht kann vorzugsweise von einer ersten Schicht mit einer homogenen Dicke umfasst sein.

Die Masterhologrammschicht kann die optische Funktion eines Hologramms beinhalten. Es kann jedoch auch sein, dass die Masterhologrammschicht lediglich geeignet ist, die optische Funktion eines Hologramms aufzuweisen bzw. zu beinhalten. Bspw. kann die Masterhologrammschicht Photopolymere umfassen, welche die Einbelichtung der optischen Funktion durch einen (späteren) Belichtungsprozess ermöglichen.

Die Länge einer Ausdehnungsrichtung der Fläche ist vorzugsweise eine Länge entlang der Fläche der Verbundscheibe in beliebiger Richtung. Vorzugsweise handelt es sich dabei um eine Gerade. Es kann sich bei einem Rechteck beispielsweise um eine Kantenlänge oder eine Diagonale handeln.

Aufgrund bspw. materieller Inhomogenitäten und nicht perfekter Verarbeitung kann die Verbundscheibe, vorzugsweise eine Oberfläche der Verbundscheibe, mindestens einen Bereich aufweisen, in dem die Form mindestens eine Abweichung von einer ebenen Form aufweist. Dies kann sich z. B. als Erhebung und/oder Vertiefung manifestieren. Als Unebenheit dabei vorzugsweise der maximale vertikale Abstand (senkrecht zur flächigen Ausdehnung) zwischen tiefster und höchster Stelle bezeichnet. Dieser soll insbesondere kleiner sein als 0,03% einer Länger einer Ausdehnungsrichtung der Verbundscheibe. Beträgt z. B. deren längste Ausdehnung entlang der Fläche einen Meter, ist dieser Abstand vorteilhafterweise kleiner als 300 µm.

Der Fachmann weiß, wie er, bspw. durch Auswahl entsprechender Glasscheiben, die Unebenheiten entsprechend klein halten kann.

Eine solche Masterplatte ist mechanisch stabil und gegen ein Durchbiegen geschützt. Gleichzeitig wird der optische Weg zwischen Masterhologramm und anzufertigender Replikation kurz gehalten. So kann sowohl die Qualität der Replikationskopie hoch gehalten werden als auch die Handhabbarkeit des Masters verbessert werden.

In einer bevorzugten Ausführungsform der Erfindung beträgt eine Dickenschwankung der Verbundscheibe weniger als 0,5% der maximalen Dicke senkrecht zur flächigen Ausdehnung der Verbundscheibe. So kann die Verbundscheibe besonders eben gehalten werden.

In einer weiteren bevorzugten Ausführungsform der Erfindung weist die dünne Glasscheibe eine Dicke senkrecht zur flächigen Ausdehnung von weniger als 1 Millimetern, insbesondere weniger als 0,5 Millimetern auf. Dies erhöht die optische Qualität der Replikation.

In einer weiteren bevorzugten Ausführungsform der Erfindung ist die Unebenheit der Verbundscheibe kleiner als 0,03 % der Länge einer Ausdehnungsrichtung der Fläche der flächigen Verbundscheibe geteilt durch die Anzahl von Unebenheiten der Fläche. Beträgt z. B. deren längste Ausdehnung entlang der Fläche einen Meter und sind auf der Verbundscheibenfläche 3 Unebenheiten verteilt, ist dieser vertikale Abstand bzw. die Unebenheit vorteilhafterweise kleiner als 100 µm. Es hat sich herausgestellt, dass die Unebenheit gemäß dieser Ausführungsform für besonders vorteilhafte Eigenschaften beim Kopierprozess sorgt.

In einer weiteren bevorzugten Ausführungsform der Erfindung weist die Masterhologrammschicht eine Dicke zwischen 1 µm und 200 µm, bevorzugt zwischen 5 µm und 50 µm, auf. Eine solche Masterhologrammschicht ist geeignet, auch komplexe optische Funktionen aufzunehmen.

In einer weiteren bevorzugten Ausführungsform der Erfindung umfasst die Länge einer Ausdehnungsrichtung der Fläche der flächigen Verbundscheibe eine Breite der Verbundscheibe von mindestens 50 cm.

In einer weiteren bevorzugten Ausführungsform der Erfindung weist die flächige Verbundscheibe eine Breite von mindestens 50 cm auf.

In einer weiteren bevorzugten Ausführungsform der Erfindung weist die dicke Glasscheibe eine Dicke zwischen 2 mm und 50 mm, bevorzugt zwischen 2 mm und 20 mm auf. Diese Dicke hat sich als ideal für eine mechanische Stabilität bei nicht zu hohem Gewicht der Masterplatte erwiesen.

In einer weiteren bevorzugten Ausführungsform der Erfindung weist die Verbundscheibe eine flächige Ausdehnung mit einer Fläche zwischen 0,25 m² und 3 m² auf.

In einer weiteren bevorzugten Ausführungsform der Erfindung umfasst die Verbundscheibe weiterhin eine transparente, beidseitig adhäsive Folie und/oder eine Trägerfolie für die Masterhologrammschicht. Gemäß der beanspruchten Erfindung umfasst die Verbundscheibe aber mindestens eine Schicht eines Klebstoffs. Diese Ausführungsform wird untenstehend in Bezug auf eine Herstellung des Masterhologramms näher beschrieben.

In der Ausführungsform der Erfindung gemäß Anspruch 13 beträgt eine Stärke bzw. Dicke der Klebstoffschicht zwischen 100 µm bis 200 µm.

In einer weiteren bevorzugten Ausführungsform der Erfindung umfasst die Trägerfolie für die Masterhologrammschicht ein Material ausgesucht aus der Gruppe Polycarbonat, Celluloseacetat-Derivate, Polyamide, Polyethylenterephthalat, Polyvinylacetat / Ethylen-Vinylacetat-Copolymere und/oder Cycloolefine und weist bevorzugt eine Dicke zwischen 25 µm und 250 µm auf. Diese Materialien weisen vorteilhafte mechanische und optische Eigenschaften auf. Diese Ausführungsform wird untenstehend im Bezug auf eine Herstellung des Masterhologramms näher beschrieben.

In einer weiteren bevorzugten Ausführungsform der Erfindung weist die transparente beidseitig adhäsive Folie eine Dicke zwischen 10 µm und 90 µm, bevorzugt von 50 µm auf.

In einer weiteren bevorzugten Ausführungsform der Erfindung umfasst der Klebstoff ein lösemittelfreies Mehrkomponentensystem auf Epoxid-, Acrylat-, Urethan- und/oder Silikonbasis.

In einer weiteren bevorzugten Ausführungsform der Erfindung weist die Masterhologrammschicht ein Photopolymer umfasst, welches insbesondere eine Eigenabsorption von sichtbarem Licht von weniger als 8 % auf. Der Fachmann weiß, wie er die Eigenabsorption messen, berechnen und/oder bestimmen kann. Hierdurch ergeben sich verbesserte optische Eigenschaften.

In einer weiteren bevorzugten Ausführungsform der Erfindung ist ein Haze-Wert der Verbundscheibe quer zur flächigen Ausdehnung kleiner als 5 %. Der Fachmann weiß, wie er den Haze-Wert messen, berechnen und/oder bestimmen kann. Hierdurch ergeben sich verbesserte optische Eigenschaften.

In einem weiteren Aspekt betrifft die Erfindung ein Herstellungsverfahren für eine Masterplatte umfassend eine ebene und flächige Verbundscheibe, bevorzugt wie vorstehend beschrieben, umfassend die folgenden Schritte:
- Aufbringen einer ersten Schicht einer homogenen Dicke, welche mindestens eine Masterhologrammschicht umfasst, auf eine erste Seite einer flächigen dünnen Glasscheibe, wobei ein Außenbereich an den Seitenrändern der dünnen Glasscheibe frei von der ersten Schicht bleibt, wobei die Masterhologrammschicht geeignet ist, eine optischen Funktion eines Hologramms aufzuweisen
- Aufbringen von Abstandshalterelementen auf die erste Seite im Außenbereich, wobei die Abstandshalterelemente eingerichtet sind, Außen- und/oder Seitenränder einer aufzubringenden flächigen dicken Glasscheibe und der dünnen Glasscheibe beim Herstellungsprozess auf einen vorab definierten Abstand zu halten,
- Deckungsgleiches Aufbringen der dicken Glasscheibe auf die erste Seite der dünnen Glasscheibe mit einer dazwischenliegenden Klebstoffschicht, wobei die dicke Glasscheibe die gleichen flächigen Abmessungen aufweist wie die dünne Glasscheibe
- Einbringen der beiden Glasscheiben in eine Anordnung umfassend ein Vakuum- und ein Vibrationsmodul, wobei die Anordnung eingerichtet ist für ein gegenseitiges Andrücken der Glasscheiben und eine gleichmäßige Verteilung des Klebstoffs in gewünschter Stärke durch Erzeugung von Unterdruck und Vibrationen, wobei bevorzugt eine Unebenheit von außenliegenden Flächen der Glasscheiben kleiner als 0,03 % einer Länge entlang der flächigen Ausdehnung der Glasscheiben gehalten wird,
- Aushärten des Klebstoffs.

Dem Fachmann ist ersichtlich, dass Vorteile, Definitionen und Ausführungsformen der erfindungsgemäßen Vorrichtung ebenso für das beanspruchte erfindungsgemäße Verfahren gelten.

Der Fachmann erkennt, dass der Schritt des "Aufbringens einer ersten Schicht einer homogenen Dicke, welche mindestens eine Masterhologrammschicht umfasst, auf eine erste Seite einer flächigen dünnen Glasscheibe, wobei ein Außenbereich an den Seitenrändern der dünnen Glasscheibe frei von der ersten Schicht bleibt, wobei die Masterhologrammschicht geeignet ist, eine optischen Funktion eines Hologramms aufzuweisen" vorzugsweise das z. B. vorangehende Bereitstellen einer flächigen dünnen Glasscheibe umfasst.

Dass die Masterhologrammschicht geeignet ist, eine optische Funktion eines Hologramms aufzuweisen, bedeutet vorzugsweise, dass sie ein entsprechendes Material umfasst, welches entweder eine der optischen Funktion entsprechende Brechzahlmodulation bereits aufweist oder aber dass diese optische Funktion durch einen entsprechenden Prozess, bspw. einer Belichtung, in die Masterhologrammschicht eingebracht werden kann, z. B. zu einem späteren Zeitpunkt.

Die aufgebrachten Abstandshalterelementen sind bevorzugt zueinander beabstandet.

Durch die Abstandshalterelemente werden vorteilhafterweise die flächige dicke Glasscheibe und die dünne Glasscheibe beim Herstellungsprozess auf einem vorab definierten Abstand gehalten. Hierdurch kann insbesondere eine im Wesentlichen vollflächige Klebeschicht in gewünschter Stärke zwischen den Glasscheiben ermöglicht werden. Der vorab definierte Abstand ist vorzugsweise gewählt, dass eine Klebstoffschicht in gewünschter Stärke realisiert werden kann. Eine Klebstoffschicht in gewünschter Stärke ist vorteilhafterweise geeignet, die mechanischen Eigenschaften, bspw. die mechanische Stabilität, die Durchbiegung und/oder die Elastizität in gewünschter Weise zu beeinflussen.

Die flächige dicke Glasscheibe und die flächige dünne Glasscheibe haben vorzugsweise die gleichen flächigen Abmessungen in der Fläche senkrecht zur Dicke.

Der Fachmann erkennt, dass der Schritt des "Deckungsgleichen Aufbringens der dicken Glasscheibe auf die erste Seite der dünnen Glasscheibe mit einer dazwischenliegenden Klebstoffschicht, wobei die dicke Glasscheibe die gleichen flächigen Abmessungen aufweist wie die dünne Glasscheibe" vorzugsweise das Aufbringen einer Klebstoffschicht, insbesondere auf die erste Schicht und den Außenbereich, insbesondere vor dem Aufbringen der dicken Glasscheibe, umfasst.

Bevorzugt wird eine Unebenheit von außenliegenden Flächen der Glasscheiben kleiner als 0,03 % einer Länge entlang der flächigen Ausdehnung der Glasscheiben gehalten. Der Fachmann weiß, wie er durch Anwendung entsprechender Fertigungstoleranzen insbesondere bei den Glasscheiben, aber vorteilhafterweise auch bei den Abstandshalterelementen, die Unebenheiten entsprechend klein halten kann. Durch Verwendung der Anordnung kann darüber hinaus vorteilhafterweise sichergestellt werden, dass die Ebenheiten der dünnen und dicken Glasscheibe auch bei der Herstellung der Verbundscheibe erhalten bleiben, indem insbesondere etwaige Spannungen durch Anwendungen von Vibrationen verhindert werden.

Hierdurch wird vorteilhafterweise ebenfalls der Klebstoff gleichmäßig verteilt. Die gewünschte Stärke entspricht insbesondere der durch den vorab definierten Abstand vorgegebenen Raum zwischen der Scheibe und einer Schicht und/oder zwischen den Scheiben.

Insbesondere kann durch Zugabe des Klebstoffs für die zwischenliegende Klebstoffschicht in gewünschter Menge in Verbindung mit der Anwendung der Module der Anordnung und den Abstandshalterelementen eine Klebstoffschicht mit geeigneten Eigenschaften realisiert werden.

In einer bevorzugten Ausführungsform der Erfindung wird die Masterhologrammschicht als flüssiges Material im Wesentlichen vollflächig aufgebracht.

Das flüssige Material kann vorzugsweise zu einem späteren Zeitpunkt, vorzugsweise vor oder während der Belichtung oder bei einer Fixierung, bspw. durch geeignete Belichtung, z. B. durch UV-Licht, in einen festen bzw. festeren Zustand übergehen.

Bei dem flüssigen Material handelt es sich insbesondere um ein flüssiges Photopolymer.

In einer bevorzugten Ausführungsform der Erfindung umfasst das flüssige Fotopolymer
(i) mindestens ein Schreibmonomer;
(ii) ein Fotoinitiatorsystem; und
(iii) mindestens eine organische Komponente
, wobei das flüssige Fotopolymer optional weiterhin eine oder mehrere der folgenden Komponenten umfasst: einen Katalysator, einen Farbstoff, einen Radikalstabilisator, ein Lösungsmittel, eine nicht polymerisierbare Komponente, einen Reaktivverdünner, ein Farbstoffoxidationsmittel, ein Farbstoffreduktionsmittel, ein Bleichmittel, ein Thixotropiermittel, ein Nukleierungsmittel und/oder Hilfs- oder Zusatzstoffe.

Geeignete flüssige Fotopolymer sind dem Fachmann bekannt. Beispielsweise eignet sich Zusammensetzungen für flüssige Fotopolymer, wie diese in der EP1779196B1 offenbart werden. In einer bevorzugten Ausführungsform ist das flüssige Fotopolymer Bindemittel frei. Das Schreibmonomer ist vorzugsweise ein ethylenisch ungesättigtes Monomer, welches die allgemeine Formel hat:

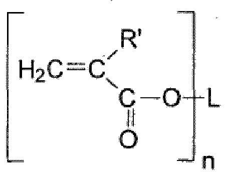

Wobei n 2 bis 4 ist, R' Wasserstoff oder CH₃ ist und L

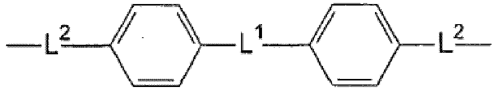

Ist,
wobei die Phenylringe optional substituiert sind mit einem oder mehreren Substituenten, ausgewählt aus der Gruppe bestehend aus Halogen, C₁₋₄-Alkyl, Alkoxy oder Hydroxy;
L¹ eine kovalente Bindung einer geradkettige oder verzweigte C₁₋₄-Alkylgruppe ist:
   L² eine kovalente Bindung, eine geradkettige oder verzweigte C₁₋₄-Alkylgruppe, die optional mit Hydroxy substituiert ist, oder -[L³-O]ₘ-, wobei L³ eine C₁₋₄ -Alkylengruppe ist und m 1 bis 40 ist, ist;
   Wobei die mindestens eine organische Komponente ausgewählt ist aus der Gruppe bestehend aus Rizinusöl, Palmkernöl, Kokosnussöl und Kombinationen davon.

In einer weiteren bevorzugten Ausführungsform der Erfindung wird vor dem Aufbringen der ersten Schicht zunächst im Wesentlichen vollflächig eine optisch transparente, beidseitig adhäsive Folie auf die erste Seite der dünnen Glasscheibe aufgebracht, wobei bevorzugt der Außenbereich an den Seitenrändern zumindest bereichsweise frei von der Folie bleibt.

Die optisch transparente, beidseitig adhäsive Folie kann auch als OCA (Optical Clear Adhesive) bezeichnet werden bzw. ein solches umfassen. Vorzugsweise ist die optisch transparente, beidseitig adhäsive Folie vom Brechungsindex her an die die dünne und/oder dicke Glasscheibe angepasst, um später Reflexionen in der Masterplatte zu vermeiden.

Durch die optisch transparente, beidseitig adhäsive Folie kann die Anhaftung der ersten Schicht auf effiziente und einfache Weise verbessert werden.

Der zumindest bereichsweise frei von Folie bleibende Außenbereich kann dann bspw. genutzt werden, um dort die Anstandshalter zu positionieren.

In einer weiteren bevorzugten Ausführungsform der Erfindung werden auf den nicht frei bleibenden Bereichen des Außenbereichs die Abstandshalterelemente auf die optisch transparente, beidseitig adhäsive Folie aufgebracht werden.

Dies macht das Aufbringen der Abstandshalterelemente besonders effizient.

In einer weiteren bevorzugten Ausführungsform der Erfindung werden die Abstandshalterelemente auf dem Außenbereich der dünnen Glasscheibe aufgeklebt, vorzugsweise mit einem schnellhärtenden und/oder dünnflüssigen Klebstoffs, insbesondere mit Sekundenklebstoff und/oder UV-Klebstoff.

So können die Abstandshalterelemente in besonders robuster Weise aufgebracht werden.

In einer weiteren bevorzugten Ausführungsform der Erfindung umfasst die erste Schicht die in einem von den Seitenrändern der dünnen Glasscheibe beabstandeten mittigen Bereich angeordnete Masterhologrammschicht, wobei in einem vom Masterhologramm freibleibenden Randbereich zwischen Außenbereich und Masterhologrammschicht eine Ausgleichsschicht mit der gleichen Dicke wie die Masterhologrammschicht umfasst ist.

Vorteilhafterweise kann dabei die Ausgleichsschicht die gleiche Zusammensetzung bzw. das gleiche Material umfassen wie die hierin beschriebene Masterhologrammschicht, also bspw. ein (zunächst flüssiges) Photopolymer oder ein Photopolymer und eine Trägerfolie.

Dier erste Schicht umfasst somit vorzugsweise zwei Zusammensetzungen, einmal die Masterhologrammschicht und einmal die Ausgleichsschicht, welche jedoch bevorzugt direkt aneinander angrenzen und so eine homogene erste Schicht bilden. So kann die Ausdehnung der Masterhologrammschicht präzise angepasst werden und es werden Ressourcen geschont. Häufig ist es besonders vorteilhaft, die zu belichtende Masterhologrammschicht eher im mittigen Bereich anzuordnen und zu den Außenrändern einen Abstand zu lassen, um z. B. im äußeren Bereich beim Replikationsprozess Haltelemente zum Halten der Masterplatte anzuordnen.

In einer weiteren bevorzugten Ausführungsform der Erfindung umfasst die Masterhologrammschicht eine Trägerfolie, wobei bevorzugt die Masterhologrammschicht die optische Funktion vor dem Aufbringen bereits aufweist.

Die Trägerfolie kann bspw. Kunststoff oder ein anderes Substratmaterial umfassen und geeignet sein, der Masterhologrammschicht eine größere mechanische Stabilität und/oder andere gewünschte Eigenschaften zu verleihen.

Die Trägerfolie ist vorzugsweise optisch transparent. Bevorzugt wird ein Polycarbonatmaterial verwendet, wobei auch eine Vielzahl von weiteren Materialien verwendet werden kann, wie hierin im Detail offenbart.

Die Trägerfolie umfasst vorzugsweise ein oder mehrere der folgenden Materialien: Polycarbonat (PC), Polyethylenterephthalat, (PET), Polybutylenterephthalat, Polyethylen, Polypropylen, Celluloseacetat, Triacetat (TAC), Cellulosehydrat, Cellulosenitrat, Cycloolefinpolymere, Polystyrol, Polyepoxide, Polysulfon, Cellulosetriacetat (CTA), Polyamid, Polymethylmethacrylat, Polyvinylchlorid, Polyvinylbutyral oder Polydicyclopentadien oder deren Mischungen.

Die Trägerfolie kann sich sowohl auf einer der dünnen Glasscheibe zugewandten Seite der Masterhologrammschicht als auch auf einer von der dünnen Glasscheibe abgewandten Seite befinden.

In einer weiteren bevorzugten Ausführungsform der Erfindung umfasst die Ausgleichsschicht eine Folie.

Die Folie kann vorzugsweise die gleichen Materialen aufweisen und/oder Materialeigenschaften umfassen wie die Trägerfolie.

Durch eine Ausgleichsschicht, die eine Folie umfasst, kann das Herstellungsverfahren vorteilhafterweise vereinfacht werden.

In einer weiteren bevorzugten Ausführungsform der Erfindung wird die Ausgleichsschicht und/oder die optisch transparente, beidseitig adhäsive Folie zunächst auf einem kompletten Randbereich aufgebracht und anschließend im Außenbereich wieder entfernt.

Dies kann sich in manchen Konstellationen als besonders einfache Herstellungsmethode erweisen.

In einer weiteren bevorzugten Ausführungsform der Erfindung wird die Ausgleichsschicht nach der Masterhologrammschicht aufgebracht, wobei die Ausgleichschicht auch auf die Masterhologrammschicht aufgebracht wird und danach dort wieder entfernt.

Dies ist für viele Ausführungsformen die effizienteste Methode zum Aufbringen der Ausgleichsschicht

In einer weiteren bevorzugten Ausführungsform der Erfindung umfasst ein Schritt des Entfernens eines Teils der Ausgleichsschicht und/oder der optisch transparenten, beidseitig adhäsiven Folie folgenden Schritt:
- Durchtrennen der Ausgleichsschicht und/oder der optisch transparenten, beidseitig adhäsiven Folie zwischen dem zu entfernenden Teil und dem übrigen Teil, bevorzugt durch ein Laserschneiden
- Abheben des zu entfernenden Teils der Ausgleichsschicht und/oder der optisch transparenten, beidseitig adhäsiven Folie.

Dabei kann es überraschenderweise durch ein präzises Durchtrennen der Ausgleichsschicht gelingen, eine homogene erste Schicht durch eine außenliegende Ausgleichsschicht und die innenliegende Masterhologrammschicht zu erzielen. So können Ausgleichsschicht und Masterhologrammschicht vorteilhafterweise nahezu nahtlos miteinander verbunden werden, wodurch sich vorteilhafterweise die "Bindenaht" nicht als Unebenheit auf die dünnere Glasplatte übertragen kann.

In einer weiteren bevorzugten Ausführungsform der Erfindung weist die dünne Glasscheibe eine Dicke senkrecht zur flächigen Ausdehnung zwischen 2 Millimetern und 0,1 Millimetern auf, wobei die dicke Glasscheibe eine Dicke senkrecht zur flächigen Ausdehnung zwischen 2 Millimetern und 20 mm aufweist.

Es hat sich herausgestellt, dass diese Dickenkombination eine optimale Kombination von geeigneten optischen Eigenschaften des Masterhologramms und stabilen mechanischen Eigenschaften der Verbundscheibe ermöglicht. Vorteilhafterweise kann so auch eine gewünschte Ebenheit der Verbundscheibe erreicht werden.

In einer weiteren bevorzugten Ausführungsform der Erfindung umfasst das deckungsgleiche Aufbringen der dicken Glasscheibe auf die dünne Glasscheibe mit einer dazwischenliegenden Klebeschicht folgende Schritte:
- Zumindest bereichsweises Aufbringen eines Klebstoffs auf die mindestens eine Schicht der dünnen Glasscheibe
- Deckungsgleiche Positionierung der dicken Glasscheibe oberhalb der dünnen Glasscheibe, wobei sich dicke und dünne Glasscheibe und/oder die dicke Glasscheibe und die Abstandshalterelemente an einer Seitenkante berühren und zwischen den Glasplatten ein keilförmiger Spalt entsteht
- Absenken des restlichen Teils der dicken Glasscheibe auf die dünne Glasscheibe unter stetiger Verkleinerung des Spalts.

Durch diese Schritte kann ein besonders präzises Aufbringen der dicken Glasscheibe erreicht werden, bei der vorteilhafterweise besonders wenig mechanischen Spannungen und/oder Scherkräfte eingebracht werden.

In einer weiteren bevorzugten Ausführungsform der Erfindung werden für die Positionierung und das Absenken Anschläge auf einer Auflage für die Glasscheiben verwendet, welche eingerichtet sind, ein seitlichen Verschieben der Glasplatten zu verhindern und ein schrittweises Absenken der dicken Glasplatte zu ermöglichen.

Eine Auflage ist vorzugsweise eine ebene und mechanisch stabile Fläche, auf der die Elemente der Verbundscheibe wie hierin beschrieben bearbeitet werden.

In einer weiteren bevorzugten Ausführungsform der Erfindung beträgt eine gewünschte Stärke der Klebeschicht zwischen 10 µm und 500 µm, bevorzugt 100 µm bis 200 µm.

In einer weiteren bevorzugten Ausführungsform der Erfindung umfasst die Anordnung eine Vakuumpresse mit einem oberhalb der Glasscheiben anordenbaren, elastischen und luftdichten Membrandeckel sowie die Auflage, wobei das Einbringen in die Anordnung folgende Schritte umfasst:
- Auflegen des luftdichten, elastischen Membrandeckels auf die Glasscheiben und die Auflage, so dass zwischen Auflage und Membrandeckel ein abgeschlossener Hohlraum entsteht, der die Glasscheiben einschließt
- Erzeugung eines Vakuums innerhalb des Hohlraums mit einem Luftdruck kleiner als 100 mbar, bevorzugt kleiner als 25 mbar, so dass die dicke Glasscheibe durch die Membran auf die dünne Glasscheibe angedrückt wird und der vorzugsweise Klebstoff gleichmäßig verteilt wird.

Die Membran kann einen beweglichen und/oder elastischen Stoff umfassen, z. B. ein Gummi. So wird durch den Prozess des Auflegens selbst vorteilhafterweise keine große Kraft auf die Glasscheiben übertragen und ein Andrücken findet im Wesentlichen erst durch Erzeugung des Vakuums statt.

Durch das Vakuum werden könnten Randbereiche in welche der Kleber noch nicht vollständig hingelaufen ist, stärker zusammengedrückt werden als die Bereiche, in denen sich schon Kleber befindet. Die Abstandshalter verhindern dabei vorteilhaftweise, dass die Glasränder zusammengepresst werden. So kann durch eine Kombination von Vakuum und Abstandshaltern eine homogene Klebeschicht und somit eine besonders ebene Verbundscheibe hergestellt werden.

In einer weiteren bevorzugten Ausführungsform der Erfindung wird das Vakuum zu einem Zeitpunkt zwischen einem Zehntel der Topfzeit des Klebstoffs und einem Viertel der Topfzeit des Klebstoffs eingeschaltet und bei Erreichen der Topfzeit des Klebstoffs ausgeschaltet wird.

Bevorzugt werden die Vibrationen direkt nach dem Aufbringen der dicken Glasscheibe angewendet. "Direkt" bedeutet hier insbesondere im Wesentlichen nach Beenden des Zeitintervalls zur Vornahme der hierfür benötigten Herstellungsschritte. Z. B. muss die Verbundscheibe zuerst in die Anordnung eingebracht werden.

Insbesondere die permanente Anwendung von Vibrationen in Verbindung mit einem Vakuum, welches nicht permanent, insbesondere nicht bis zum Aushärten des Klebstoffs angewendet wird, kann so vorteilhaftweise eine homogene Klebeschicht und/oder eine ebene Verbundscheibe hergestellt werden. Sollte bspw. das Vakuum den Mittelteil der Scheiben zu stark zusammenpressen, stellt sich dies vorteilhafterweise zurück, wenn das Vakuum rechtzeitig, also bevorzugt bevor der Klebstoff eine gewisse Festigkeit erreicht, ausgestellt wird. Dabei kann z. B. aus dem Klebespalt im mittigen Bereich ausgepresster Kitt wieder in den Spalt gesogen werden, in der Folge stellt sich eine recht einheitliche Klebstoffschichtdicke ein. Vorteilhafterweise wird dieser Prozess durch das Rütteln bzw. die Vibrationen unterstützt.

In einer weiteren bevorzugten Ausführungsform der Erfindung wird das Vakuum zu einem Zeitpunkt zwischen einem Zehntel der Topfzeit des Klebstoffs und einem Viertel der Topfzeit des Klebstoffs eingeschaltet und bei Erreichen der doppelte Topfzeit des Klebstoffs ausgeschaltet wird.

Obwohl sich mit Erreichen der Topfzeit deutliches Festkörperverhalten des Klebstoffs zeigt, wird durch Abwarten bis zur doppelten Topfzeit überraschenderweise deutlich besser verhindert, dass sich der Klebespalt öffnet und dabei z. B. Luftblasen zieht. Dies kann ansonsten insbesondere bei Verwendung von sehr steifen Glasscheiben der Fall sein.

In einer weiteren bevorzugten Ausführungsform der Erfindung weisen die Vibrationen eine Frequenz zwischen 50 Hz und 20 kHz auf und bevorzugt zeitlich variiert werden, wobei die Vibrationen vorzugsweise bis zum Aushärten des Klebstoffs angewendet werden.

Es hat sich herausgestellt, dass hierdurch der Klebstoff besonders gleichmäßig verteilt werden kann und/oder etwaige Spannungen innerhalb der Verbundscheibe gelöst werden können.

In einer weiteren bevorzugten Ausführungsform der Erfindung wird das Aushärten durch Wärmezufuhr unterstützt.

So kann der Aushärteprozess individuell gesteuert und/oder beschleunigt werden.

In einer weiteren bevorzugten Ausführungsform der Erfindung ist nach dem Aushärten des Klebstoffs ein mechanisches Entfernen von Klebstoffrückstanden an den Seitenflächen der entstandenen Verbundscheibe umfasst, bevorzugt durch einen Schleifprozess.

In einer weiteren bevorzugten Ausführungsform der Erfindung wird als Auflage eine mechanisch steife und ebene Arbeitsplatte mit mindestens der Fläche wie die Glasscheiben verwendet, welche vorzugsweise eingerichtet ist, bei einer gleichen Belastung maximal 1/10 der Durchbiegung der dicken Glasscheibe aufzuweisen.

Dass die Arbeitsplatte bei einer gleichen Belastung maximal 1/10 der Durchbiegung der dicken Glasscheibe aufweist, bedeutet vorzugsweise, dass die Arbeitsplatte sich bei einer auf sie wirkenden Kraft, welche beispielsweise mittig wirkt und senkrecht zur flächigen Ausdehnung gerichtet ist, maximal 1/10 so stark durchbiegt wie die dicke Glasscheibe bei einer gleichartig wirkenden und gleich großen Kraft. Dabei wird bevorzugt angenommen, dass die Arbeitsplatte bzw. die Glasscheibe an den Rändern aufliegt (oder anderweitig im Wesentlichen ortsfest an den Rändern gesichert ist) und somit an den Rändern eine unterstützende Gegenkraft gegen die durchbiegende Kraft ausgeübt wird. Durchbiegung bedeutet dabei vorzugsweise den Versatz gegenüber einer unbelasteten Arbeitsplatte bzw. Glasscheibe. Es hat sich herausgestellt, dass bei Verwendung einer solchen Arbeitsplatte eine besonders ebene Verbundscheibe realisiert werden kann, welche die vorstehend genannten, bevorzugten Unebenheiten vorteilhafterweise aufweist.

In einer weiteren bevorzugten Ausführungsform der Erfindung wird als Auflage eine mechanisch steife und ebene Arbeitsplatte mit einer Unebenheit kleiner als 50 µm pro Meter Kantenlänge der Arbeitsplatte verwendet, bevorzugt ein Breadbord mit einer inneren Wabenstruktur oder eine Steinzeugplatte aus Granit mit mindestens 10 cm Dicke, wobei die Kantenlänge der Arbeitsplatte bevorzugt in jede Richtung um mindestens 100 mm größer ist als die Ausdehnung der Glasscheiben in diese Richtung.

Eine Unebenheit kleiner als 50 µm pro Meter Kantenlänge der Arbeitsplatte bedeutet beispielsweise, dass bei einer Kantenlänge von 2 m die Unebenheit kleiner als 100 µm ist. Die Unebenheit von 50 µm kann somit als konstanter Faktor angenommen werden, der mit der tatsächlichen Kantenlänge zu multiplizieren ist um die begrenzende Unebenheit für die Arbeitsplatte zu errechnen.

Bei der Verwendung eines Breadboards kann es vorteilhaft sein, zur Abdeckung etwaiger Löcher im Breadboard eine weitere Glasplatte aufzulegen.

Es hat sich herausgestellt, dass bei Verwendung einer solchen Arbeitsplatte eine besonders ebene Verbundscheibe realisiert werden kann, welche die vorstehend genannten, bevorzugten Unebenheiten vorteilhafterweise aufweist.

In einer weiteren bevorzugten Ausführungsform der Erfindung umfasst das Herstellungsverfahren weiterhin das Aufbelichten der optischen Funktion auf die Masterhologrammschicht, vorzugsweise nach dem Aushärten des Klebstoffs.

Das Aufbelichten der optischen Funktion bedeutet vorzugsweise, dass die von der Masterplatte zu replizierende optische Eigenschaft dem Masterhologramm selbst zunächst einbelichtet wird. Dabei kann vorzugsweise eine kohärente optische Lichtquelle zum Einsatz kommen. Um die optischen Eigenschaften für die Einbelichtung zu erzeugen, können dem Fachmann bekannte Verfahren verwendet werden. Aufbelichten und Einbelichten sind vorzugsweise synonym zu verstehen.

In einer weiteren bevorzugten Ausführungsform der Erfindung wird eine weitere Klebeschicht eingebracht, welche eingerichtet ist zum Ausgleich verschiedener thermischer Ausdehnungen der umfassten Platten und/oder Schichten, wobei die Klebeschicht insbesondere Polyvinyl-ButylAcetat, Polyvinylethylacetat und/oder RTV - Silikon umfasst.

Diese Materialien haben sich als besonders geeignet zum Ausgleich thermischer Ausdehnungen erwiesen.

In einer weiteren bevorzugten Ausführungsform der Erfindung umfasst die Masterhologrammschicht ein Photopolymer. Dabei kann es sich um die vorstehend genannten flüssigen Photopolymere handeln oder um andere, nicht-flüssige Photopolymere, bspw. dem Fachmann bekannte photosensitive Materialen. Als Beispiel seien hier die in der "Bayfoil" von Covestro verwendeten Photopolymere genannt oder Dichromatgelatine, welche zwar vorzugsweise aus Lösung aufgetragen wird, sich nach dem Abdampfen des Lösemittels aber verfestigt.

In einem weiteren Aspekt betrifft die Erfindung eine Masterplatte, hergestellt durch ein Herstellungsverfahren wie vorstehend beschrieben.

Dem Fachmann ist ersichtlich, dass Vorteile, Definitionen und Ausführungsformen des erfindungsgemäßen Verfahrens und der erfindungsgemäßen Vorrichtung nach dem ersten Aspekt ebenso für die vorstehend und nachfolgend beanspruchte erfindungsgemäße Vorrichtung gelten.

### Beschreibung der Erfindung:

Die Erfindung soll im Folgenden unter Verweis auf weitere Abbildungen und Beispiele erläutert werden. Die Beispiele und Abbildungen dienen der Illustration bevorzugter Ausführungsform der Erfindung, ohne diese zu beschränken.
**Figur 1** zeigt die Masterplatte für die industrielle Hologrammreplikation.
**Figur 2** zeigt die Masterplatte während eines Herstellungsschrittes von der Seite.
**Figur 3** zeigt die Masterplatte während eines Herstellungsschrittes von oben.
**Figur 4** zeigt seitlich die Masterplatte während der Herstellung nach dem Aufbringen Abstandshalterelementen.
**Figur 5** zeigt die Masterplatte während des gleichen Herstellungsschritts von oben.
**Figur 6** zeigt seitlich die Masterplatte während der Herstellung nach dem deckungsgleichen Aufbringen der dicken Glasscheibe.
**Figur 7** zeigt die Masterplatte von der Seite nach dem Einbringen in die Anordnung umfassend ein Vakuum- und ein Vibrationsmodul.
**Figur 8** zeigt von oben die Masterplatte während der Herstellung, wobei die dünne Glasscheibe bereits die erste Schicht aufweist.
**Figur 9** zeigt die gleiche Ausführungsform in einer seitlichen Ansicht.
**Figur 10** zeigt seitlich die teilweise bereits hergestellte Masterplatte bei einer Variante des Herstellungsverfahrens.
**Figur 11** zeigt seitlich die teilweise bereits hergestellte Masterplatte beim Schritt des Entfernens der Ausgleichsschicht.
**Figur 12** zeigt seitlich die Masterplatte bei nur die Masterhologrammschicht auf die dünne Glasscheibe aufgebracht worden ist.
**Figur 13** zeigt seitlich die Masterplatte, wobei nun die Ausgleichsschicht nach einer Ausführungsform aufgebracht wurde.
**Figur 14** zeigt seitlich die Masterplatte, bei der ein Laserschneidegerät verwendet wird, um den Teil der Ausgleichsschicht abzutrennen.
**Figur 15** zeigt seitlich die Masterplatte, bei der die Ausgleichschicht oberhalb der Masterhologrammschicht wieder entfernt wurde.
**Figur 16** zeigt die bevorzugten Schritte des Herstellungsverfahrens.

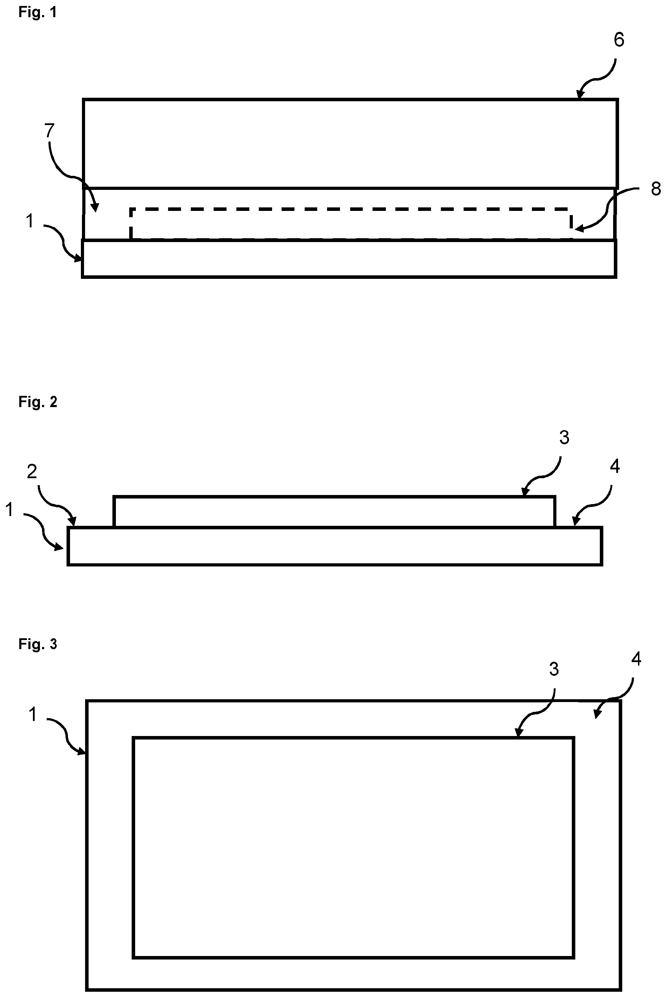

**Figur 1** zeigt die Masterplatte für die industrielle Hologrammreplikation, umfassend eine ebene und flächige Verbundscheibe mit einer dicken Glasscheibe **6** und einer dünnen Glasscheibe **1,** sowie einer dazwischenliegenden Masterhologrammschicht **8.** Die Masterplatte weist die Eigenschaften gemäß Beschreibung auf, wodurch diese mechanisch stabil ist und eine Replikation hoher optischer Güte ermöglicht.

**Figur 2** zeigt seitlich eine Masterplatte während der Herstellung, bei der bereits eine erste homogene Schicht **3,** die mindestens eine Masterhologrammschicht umfasst, auf eine erste Seite **2** einer flächigen dünnen Glasscheibe **1** aufgebracht wurde. Der Außenbereich **4** an den Seitenrändern der dünnen Glasscheibe **1** bleibt dabei frei von der ersten Schicht.

**Figur 3** zeigt die Masterplatte während des gleichen Herstellungsschritts von oben, wobei die erste Seite **2** oben liegt. Hierbei ist gut der die erste Schicht **3** vollständig umgebende, freibleibende Außenbereich **4** erkennbar.

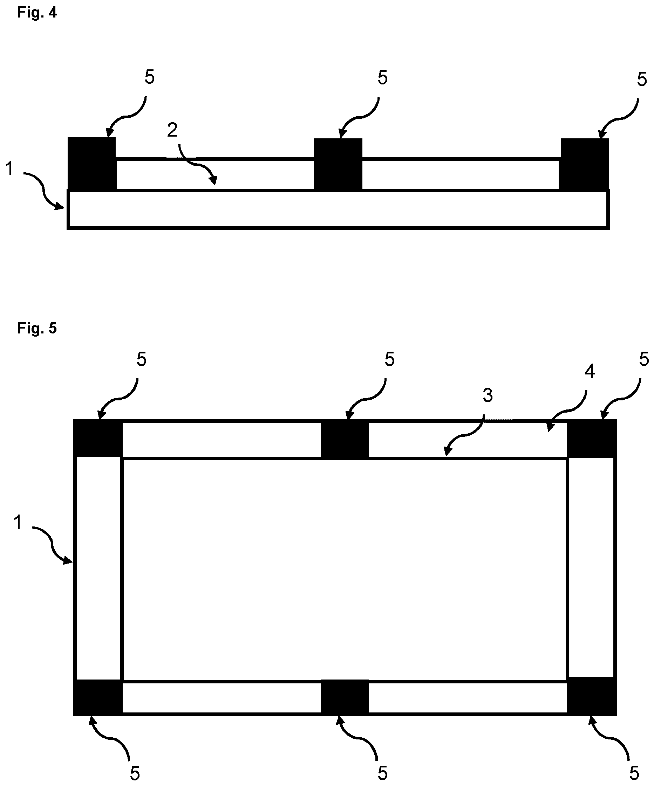

**Figur 4** zeigt seitlich die Masterplatte während der Herstellung nach dem Aufbringen Abstandshalterelementen **5** auf die erste Seite **2** der dünnen Glasscheibe **1** im Außenbereich **4.** Diese Abstandshalterelemente **5** überragen die erste Schicht **3** ein wenig, damit sie die aufzubringende dicke Glasscheibe auf einen vorab definierten Abstand zur dünnen Glasscheibe **1** halten können.

**Figur 5** zeigt die Masterplatte während des gleichen Herstellungsschritts von oben. Die gezeigten Abstandshalterelemente **5** im Außenbereich **4** sind zueinander beabstandet und einigermaßen gleichmäßig über den Außenbereich verteilt. Vorliegend sind diese auf den Ecken der dünnen Glasscheibe **1** und entlang der langen Kanten der dünnen Glasscheibe ebenfalls mittig aufgebracht. Abstände, Anzahl und Ort der Abstandshalterelemente **5** können jedoch variieren.

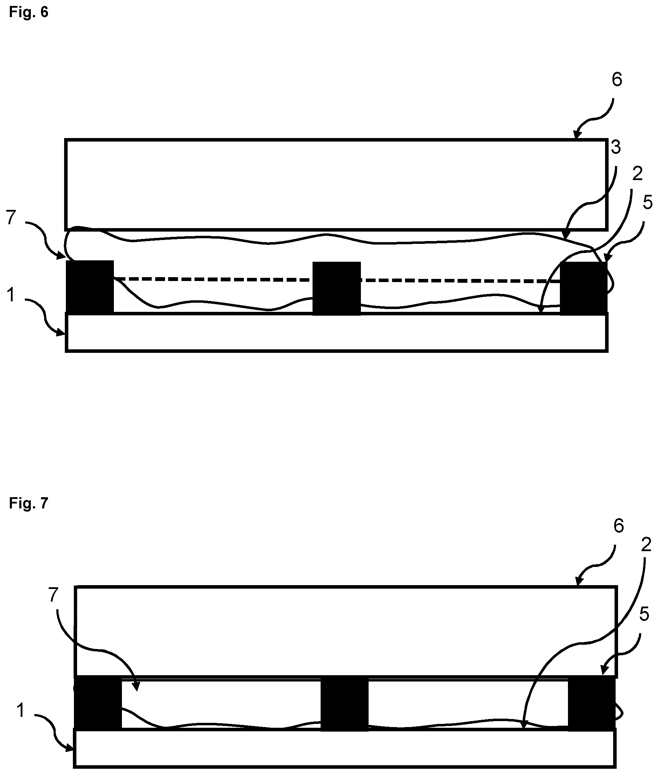

**Figur 6** zeigt seitlich die Masterplatte während der Herstellung nach dem deckungsgleichen Aufbringen der dicken Glasscheibe **6** auf die erste Seite **2** der dünnen Glasscheibe **1** mit einer dazwischenliegenden Klebstoffschicht **7.** Die Klebstoffschicht **7** ist in diesem Schritt noch nicht in seiner Form festgelegt und ausgehärtet und der Abstand zwischen dünner Glasscheibe **1** und dicker Glasscheibe **6** noch nicht endgültig definiert. Die Abstandshalterelemente **5** tragen noch nicht zur Festlegung des Abstands bei. Die gestrichelte Linie zeigt die von der Klebstoffschicht **7** an dem Außenbereich seitlich überwiegend überdeckte erste Schicht **3.**

**Figur 7** zeigt die Masterplatte von der Seite nach dem Einbringen in die Anordnung umfassend ein Vakuum- und ein Vibrationsmodul. Durch Erzeugung von Unterdruck und Vibrationen der Anordnung wurden die dicke Glasscheibe **6** und die dünne Glasscheibe **1** aneinander angedrückt und der Klebstoff der Klebstoffschicht **7** in gewünschter Stärke gleichmäßig verteilt. Dafür kann die Anordnung beispielsweise eine Vakuumpresse umfassen. Diese kann z. B. einen oberhalb der Glasscheiben anordenbaren, elastischen und luftdichten Membrandeckel aufweisen sowie eine Auflage für die Glasscheiben. Durch Auflegen des luftdichten, elastischen Membrandeckels auf die Glasscheiben und die Auflage, entsteht zwischen Auflage und Membrandeckel ein abgeschlossener Hohlraum, der die Glasscheiben einschließt. Wenn das Vakuum angeschaltet wird, wird der Deckel angedrückt und drückt so die dicke Glasscheibe **6** und die dünne Glasscheibe **1** aneinander. Die Auflage kann unter Vibrationen gesetzt werden, welche insbesondere den Prozess der gleichmäßigen Verteilung des Klebers für eine homogene Klebeschicht **7** unterstützen. Die verbliebene inhomogene Verteilung der Klebstoffschicht **7,** welche im Außenbereich auf der Abbildung nach unten zur ersten Seite **2** der dünnen Glasscheibe hin in Figur 7 weiterhin sichtbar ist, ist unschädlich und kann vorteilhafterweise durch Anpassung der erzeugten Unterdruck und Vibrationen ebenfalls eliminiert werden, so dass die Klebstoffschicht **7** auch dort homogen und "glatt" ist (nicht gezeigt). Die seitlich im Außenbereich überdeckte erste Schicht ist hier (im Gegensatz zur Figur 6) nicht gezeigt.

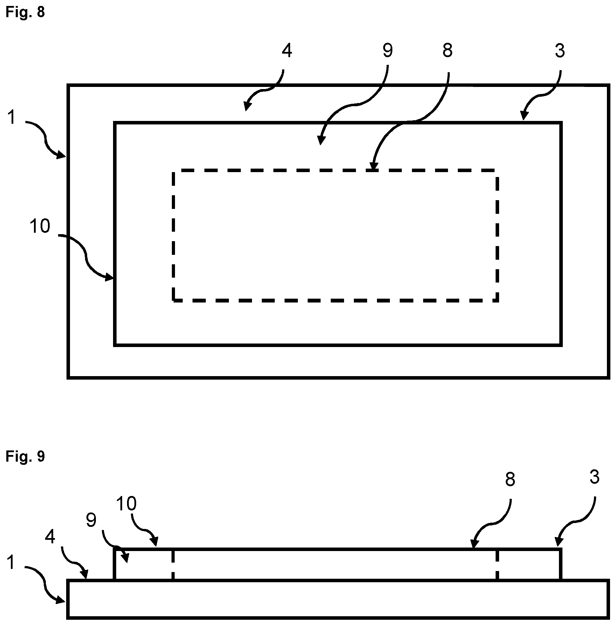

**Figur 8** zeigt von oben die Masterplatte während der Herstellung, wobei die dünne Glasscheibe **1** bereits die erste Schicht **3** aufweist. Bei dieser Ausführungsform umfasst die erste Schicht **3** in einem von den Seitenrändern der dünnen Glasscheibe beabstandeten mittigen Bereich angeordnete Masterhologrammschicht **8.** In einem vom Masterhologramm freibleibenden Randbereich **9** zwischen Außenbereich **4** und Masterhologrammschicht **8** ist eine Ausgleichsschicht **10** mit der gleichen Dicke wie die Masterhologrammschicht **8** umfasst, so dass die erste Schicht **3** insgesamt eine homogene Dicke aufweist.

**Figur 9** zeigt diese Ausführungsform in einer seitlichen Ansicht. Die gleiche Dicke der Ausgleichsschicht **10** und der Masterhologrammschicht **8** ist gut erkennbar.

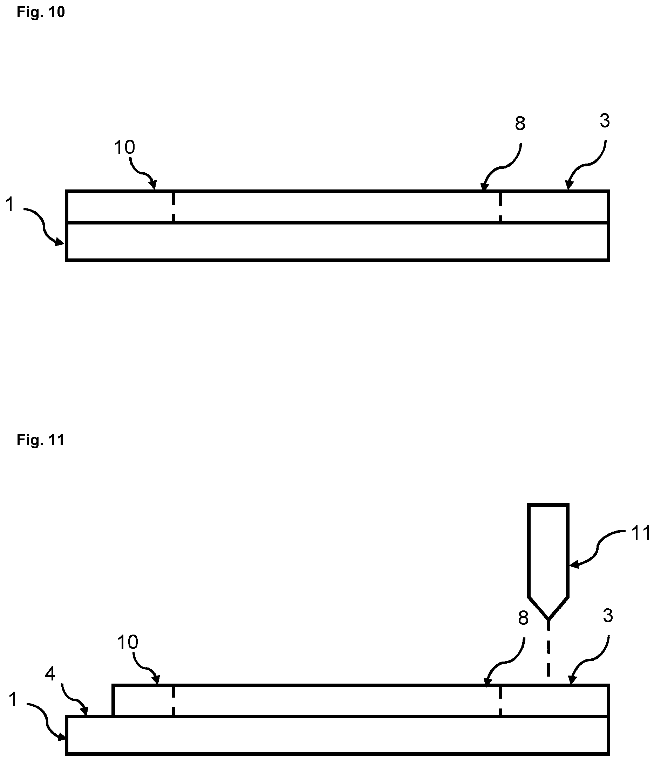

**Figur 10** zeigt seitlich die teilweise bereits hergestellte Masterplatte bei einer Variante des Herstellungsverfahrens, bei der eine Ausgleichsschicht **10** umfasst ist, wobei die Ausgleichsschicht **10** zunächst auf einem kompletten Randbereich auf die dünne Glasscheibe **1** aufgebracht wird.

**Figur 11** zeigt seitlich die teilweise bereits hergestellte Masterplatte beim Schritt des Entfernens der Ausgleichsschicht **10** aus Figur 9 im Außenbereich **4** durch ein Laserschneidegerät **11.** Auf der linken Seite ist die Ausgleichsschicht **10** im Außenbereich **4** bereits entfernt.

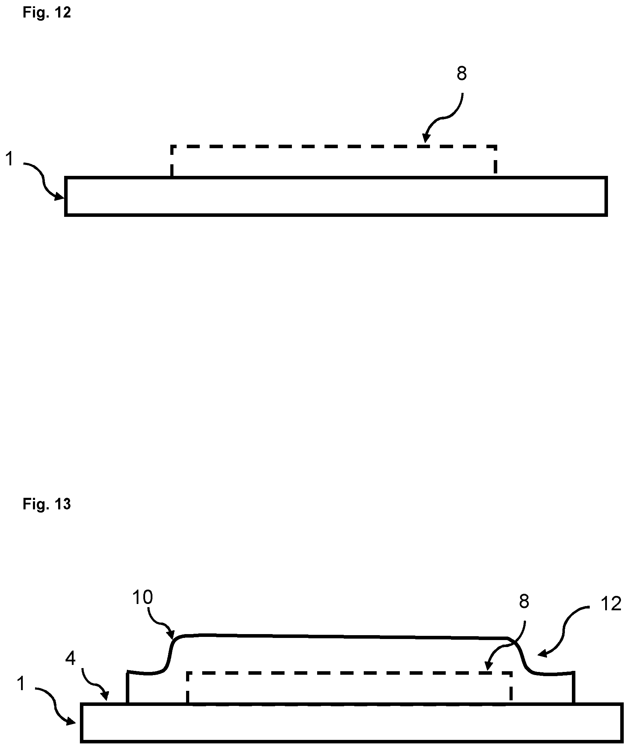

**Figur 12** - **Figur 15** beschreiben das Herstellungsverfahrens gemäß der Ausführungsform, bei der die Ausgleichsschicht **10** nach der Masterhologrammschicht **8** aufgebracht wird, wobei die Ausgleichschicht **10** auch auf die Masterhologrammschicht **8** aufgebracht wird und danach dort wieder entfernt wird.

**Figur 12** zeigt seitlich die Masterplatte bei der zuerst nur die Masterhologrammschicht **8** auf die dünne Glasscheibe **1** aufgebracht worden ist.

**Figur 13** zeigt seitlich die Masterplatte, wobei nun die Ausgleichsschicht **10** auf den vom Masterhologramm freibleibenden Randbereich **9** zwischen Außenbereich **4** und Masterhologrammschicht **8** und auf die Masterhologrammschicht **8** selbst aufgebracht wurde. Somit ist die Dicke der sich ergebenden Schicht **12** insgesamt inhomogen.

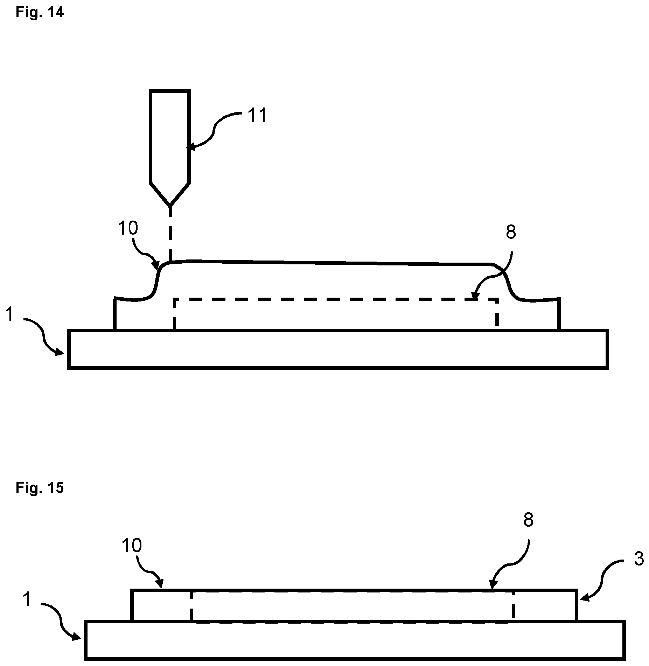

**Figur 14** zeigt nun seitlich die gleiche Masterplatte, bei der ein Laserschneidegerät **11** verwendet wird, um den Teil der Ausgleichsschicht **10** oberhalb der Masterhologrammschicht **8** vom übrigen Teil abzutrennen. So kann dieser Teil der Ausgleichsschicht **10** nachfolgend entfernt werden.

**Figur 15** zeigt seitlich die gleiche Masterplatte, bei der die Ausgleichschicht **10** oberhalb der Masterhologrammschicht **8** wieder entfernt wurde. Es ergibt sich dann die erste homogene Schicht **3.**

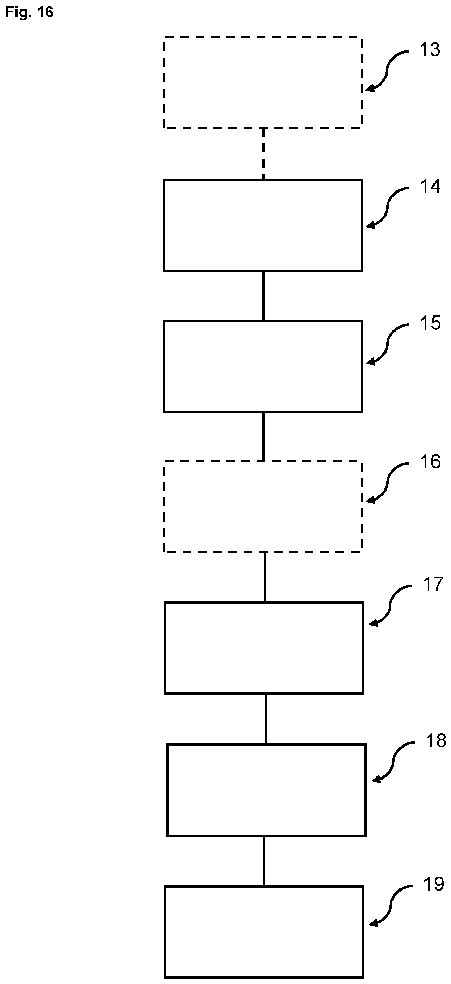

**Figur 16** zeigt noch einmal die bevorzugten Schritte des Herstellungsverfahrens:
Schritt **14:** Das Aufbringen einer ersten Schicht einer homogenen Dicke, welche mindestens eine Masterhologrammschicht umfasst, auf eine erste Seite einer flächigen dünnen Glasscheibe, wobei ein Außenbereich an den Seitenrändern der dünnen Glasscheibe frei von der ersten Schicht bleibt.

Schritt **15:** das Aufbringen von Abstandshalterelementen auf die erste Seite im Außenbereich.

Schritt **17:** das deckungsgleiche Aufbringen der dicken Glasscheibe auf die erste Seite der dünnen Glasscheibe mit einer dazwischenliegenden Klebstoffschicht, wobei das Aufbringen der Klebstoffschicht vorzugsweise auch als vorangehender separater Zwischenschritt **16** definiert werden kann, welcher daher nur gestrichelt gezeichnet wurde. In diesem Fall umfasst Schritt **17** nur das deckungsgleiche Aufbringen der dicken Glasscheibe.

Schritt **18:** das Einbringen der beiden Glasscheiben in eine Anordnung umfassend ein Vakuum- und ein Vibrationsmodul.

Schritt **19:** das Aushärten des Klebstoffs.

Schritt **14** umfasst vorzugsweise implizit das Bereitstellen der dünnen Glasscheibe. Dies kann jedoch ebenso vorzugsweise als separater, insbesondere erster Schritt **13** des Herstellungsverfahrens angesehen werden, welcher daher nur gestrichelt dargestellt ist.

### BEZUGSZEICHENLISTE

- 1: Flächige dünne Glasscheibe
- 2: Erste Seite der flächigen dünnen Glasscheibe
- 3: Erste homogene Schicht
- 4: Frei bleibender Außenbereich
- 5: Abstandshalterelemente
- 6: Dicke Glasscheibe
- 7: Klebstoffschicht
- 8: Masterhologrammschicht
- 9: Vom Masterhologramm frei bleibender Randbereich
- 10: Ausgleichsschicht
- 11: Laserschneider
- 12: Sich ergebende Schicht, wenn Ausgleichsschicht auf Masterhologrammschicht aufgebracht wird
- 13: Bereitstellen der dünnen Glasscheibe
- 14: Aufbringen einer ersten Schicht auf eine erste Seite der dünnen Glasscheibe
- 15: Aufbringen von Abstandshalterelementen auf die erste Seite
- 16: Aufbringen der Klebstoffschicht
- 17: Aufbringen der dicken Glasscheibe, vorzugsweise mit einer dazwischenliegenden Klebstoffschicht
- 18: Einbringen der beiden Glasscheiben in eine Anordnung umfassend ein Vakuum- und ein Vibrationsmodul
- 19: Aushärten des Klebstoffs

## Patentansprüche

1. Herstellungsverfahren für eine Masterplatte umfassend eine ebene und flächige Verbundscheibe, umfassend die folgenden Schritte:
- Aufbringen einer ersten Schicht einer homogenen Dicke (3), welche mindestens eine Masterhologrammschicht (8) umfasst, auf eine erste Seite (2) einer flächigen dünnen Glasscheibe (1), wobei ein Außenbereich (4) an den Seitenrändern der dünnen Glasscheibe (1) frei von der ersten Schicht (3) bleibt, wobei die Masterhologrammschicht (8) geeignet ist, eine optischen Funktion eines Hologramms aufzuweisen
- Aufbringen von Abstandshalterelementen (5) auf die erste Seite (2) im Außenbereich (4), wobei die Abstandshalterelemente (5) eingerichtet sind, die Außen- und/oder Seitenränder einer aufzubringenden flächigen dicken Glasscheibe (6) und der dünnen Glasscheibe (1) beim Herstellungsprozess auf einen vorab definierten Abstand zu halten,
- Deckungsgleiches Aufbringen der dicken Glasscheibe (6) auf die erste Seite der dünnen Glasscheibe (2) mit einer dazwischenliegenden Klebstoffschicht (7), wobei die dicke Glasscheibe (6) die gleichen flächigen Abmessungen aufweist wie die dünne Glasscheibe (1)
- Einbringen der beiden Glasscheiben (1, 6) in eine Anordnung umfassend ein Vakuum- und ein Vibrationsmodul, wobei die Anordnung eingerichtet ist für ein gegenseitiges Andrücken der Glasscheiben (1, 6) und eine gleichmäßige Verteilung des Klebstoffs in gewünschter Stärke durch Erzeugung von Unterdruck und Vibrationen,
- Aushärten des Klebstoffs.

2. Herstellungsverfahren nach dem vorherigen Anspruch, wobei die Masterhologrammschicht (8) als flüssiges Material im Wesentlichen vollflächig aufgebracht wird oder wobei die Masterhologrammschicht (8) eine Trägerfolie umfasst, wobei bevorzugt die Masterhologrammschicht (8) die optische Funktion vor dem Aufbringen bereits aufweist.

3. Herstellungsverfahren nach einem der vorherigen Ansprüche, wobei vor dem Aufbringen der ersten Schicht (3) zunächst im Wesentlichen vollflächig eine optisch transparente, beidseitig adhäsive Folie auf die erste Seite (2) der dünnen Glasscheibe (1) aufgebracht wird, wobei bevorzugt der Außenbereich (4) an den Seitenrändern zumindest bereichsweise frei von der Folie bleibt.

4. Herstellungsverfahren nach einem oder mehreren der vorherigen Ansprüche, wobei die erste Schicht die in einem von den Seitenrändern der dünnen Glasscheibe (1) beabstandeten mittigen Bereich angeordnete Masterhologrammschicht (8) umfasst und in einem vom Masterhologramm freibleibenden Randbereich zwischen Außenbereich (4) und Masterhologrammschicht (8) eine Ausgleichsschicht (10) mit der gleichen Dicke wie die Masterhologrammschicht (8) umfasst, wobei die Ausgleichsschicht (10) bevorzugt eine Folie umfasst.

5. Herstellungsverfahren nach einem oder mehreren der vorherigen Ansprüche 3 oder 4,
wobei die Ausgleichsschicht (10) und/oder die optisch transparente, beidseitig adhäsive Folie zunächst auf einem kompletten Randbereich aufgebracht wird und anschließend im Außenbereich (4) wieder entfernt wird
und/oder
wobei die Ausgleichsschicht (10) nach der Masterhologrammschicht (8) aufgebracht wird, wobei die Ausgleichschicht (10) auch auf die Masterhologrammschicht (8) aufgebracht wird und danach dort wieder entfernt wird,
wobei vorzugsweise ein Schritt des Entfernens eines Teils der Ausgleichsschicht (10) und/oder der optisch transparenten, beidseitig adhäsiven Folie folgenden Schritt umfasst:
- Durchtrennen der Ausgleichsschicht (10) und/oder der optisch transparenten, beidseitig adhäsiven Folie zwischen dem zu entfernenden Teil und dem übrigen Teil, bevorzugt durch ein Laserschneiden
- Abheben des zu entfernenden Teils der Ausgleichsschicht (10) und/oder der optisch transparenten, beidseitig adhäsiven Folie.

6. Herstellungsverfahren nach einem oder mehreren der vorherigen Ansprüche, wobei die dünne Glasscheibe (1) eine Dicke senkrecht zur flächigen Ausdehnung zwischen 2 Millimetern und 0,1 Millimetern aufweist und wobei die dicke Glasscheibe (6) eine Dicke senkrecht zur flächigen Ausdehnung zwischen 2 Millimetern und 20 mm aufweist.

7. Herstellungsverfahren nach einem oder mehreren der vorherigen Ansprüche, wobei die Anordnung eine Vakuumpresse mit einem oberhalb der Glasscheiben (1, 6) anordenbaren, elastischen und luftdichten Membrandeckel sowie die Auflage umfasst, wobei das Einbringen in die Anordnung folgende Schritte umfasst:
- Auflegen des luftdichten, elastischen Membrandeckels auf die Glasscheiben (1, 6) und die Auflage, so dass zwischen Auflage und Membrandeckel ein abgeschlossener Hohlraum entsteht, der die Glasscheiben (1, 6) einschließt
- Erzeugung eines Vakuums innerhalb des Hohlraums mit einem Luftdruck kleiner als 100 mbar, bevorzugt kleiner als 25 mbar, so dass die dicke Glasscheibe (6) durch die Membran auf die dünne Glasscheibe (1) angedrückt wird und der Klebstoff vorzugsweise gleichmäßig verteilt wird.

8. Herstellungsverfahren nach einem oder mehreren der vorherigen Ansprüche,
wobei das Vakuum oder der Unterdruck zu einem Zeitpunkt zwischen einem Zehntel der Topfzeit des Klebstoffs und einem Viertel der Topfzeit des Klebstoffs eingeschaltet und bei Erreichen der Topfzeit des Klebstoffs ausgeschaltet wird.

9. Herstellungsverfahren nach einem oder mehreren der vorherigen Ansprüche,
wobei die Vibrationen eine Frequenz zwischen 50 Hz und 20 kHz aufweisen und bevorzugt zeitlich variiert werden, wobei die Vibrationen vorzugsweise bis zum Aushärten des Klebstoffs angewendet werden.

10. Herstellungsverfahren nach einem oder mehreren der vorherigen Ansprüche, umfassend weiterhin das Aufbelichten der optischen Funktion auf die Masterhologrammschicht (8), vorzugsweise nach dem Aushärten des Klebstoffs.

11. Herstellungsverfahren nach einem oder mehreren der vorherigen Ansprüche, wobei die Masterhologrammschicht ein Photopolymer umfasst.

12. Masterplatte, hergestellt nach einem oder mehreren der vorhergehenden Ansprüche.

13. Masterplatte für eine industrielle Hologrammreplikation, umfassend eine ebene und flächige Verbundscheibe mit einer dicken Glasscheibe (6) als Träger zur Minimierung der Durchbiegung der Masterplatte und einer dünnen Glasscheibe (1) zum Schutz einer Masterhologrammschicht vor mechanischen Einflüssen sowie
mindestens einer zwischen den Glasscheiben liegenden Masterhologrammschicht (8), welche die optische Funktion eines Hologramms beinhaltet,
wobei die dicke Glasscheibe (6) eine Dicke senkrecht zur flächigen Ausdehnung größer als 2 Millimeter aufweist,
wobei die dünne Glasscheibe (1) eine Dicke senkrecht zur flächigen Ausdehnung zwischen 2 Millimetern und 0,1 Millimetern aufweist,
wobei
die Verbundscheibe weiterhin mindestens eine Schicht (7) eines Klebstoffs zwischen der dicken Glasscheibe (6) und der dünnen Glasscheibe (1) umfasst, **dadurch gekennzeichnet, dass** die Dicke der
Klebstoffschicht 100 µm bis 200 µm beträgt.

14. Masterplatte nach dem vorherigen Anspruch 13,
**dadurch gekennzeichnet, dass**
die Masterhologrammschicht (8) eine Dicke zwischen 1 µm und 200 µm, bevorzugt zwischen 5 µm und 50 µm, aufweist.

15. Masterplatte nach dem vorherigen Anspruch 13 oder 14,
**dadurch gekennzeichnet, dass**
die Verbundscheibe weiterhin eine transparente, beidseitig adhäsive Folie und/oder eine Trägerfolie für die Masterhologrammschicht umfasst.

## Claims

1. Production method for a master plate comprising a flat and two-dimensional composite pane, comprising the following steps:
- applying a first layer of homogeneous thickness (3) that comprises at least one master hologram layer (8) on a first side (2) of a two-dimensional thin glass pane (1), where an outer region (4) at the lateral edges of the thin glass pane (1) remains free of the first layer (3), where the master hologram layer (8) is capable of having an optical function of a hologram,
- applying spacer elements (5) to the first side (2) in the outer region (4), where the spacer elements (5) are set up to keep the outer edges and/or lateral edges of a two-dimensional thick glass pane (6) to be applied and of the thin glass pane (1) at a predefined separation in the production process,
- applying the thick glass pane (6) by superimposition onto the first side of the thin glass pane (2) with an intervening adhesive layer (7), where the thick glass pane (6) has the same areal dimensions as the thin glass pane (1),
- introducing the two glass panes (1, 6) into an arrangement comprising a vacuum module and a vibration module, where the arrangement is set up for mutual contact pressure of the glass panes (1, 6) and uniform distribution of the adhesive in the desired thickness by generation of reduced pressure and vibrations,
- curing the adhesive.

2. Production method according to the preceding claim, wherein the master hologram layer (8) is applied essentially over the full area as a liquid material or
wherein the master hologram layer (8) comprises a carrier film, wherein the master hologram layer (8) preferably already has the optical function prior to the application.

3. Production method according to either of the preceding claims, wherein the application of the first layer (3) is preceded by first applying an optically transparent, double-sidedly adhesive film essentially to the full area of the first side (2) of the thin glass pane (1), preferably leaving at least some areas of the outer region (4) at the lateral edges free of the film.

4. Production method according to one or more of the preceding claims, wherein the first layer comprises the master hologram layer (8) which is disposed in a middle region spaced apart from the lateral edges of the thin glass pane (1) and comprises a compensation layer (10) having the same thickness as the master hologram layer (8) in an edge region between outer region (4) and master hologram layer (8) that remains free of the master hologram, where the compensation layer (10) preferably comprises a film.

5. Production method according to one or more of the preceding Claims 3 and 4,
wherein the compensation layer (10) and/or the optically transparent, double-sidedly adhesive film is first applied to a complete edge region and then is removed again in the outer region (4)
and/or
wherein the compensation layer (10) is applied after the master hologram layer (8),
wherein the compensation layer (10) is also applied to the master hologram layer (8) and then is removed there again,
wherein a step of removing part of the compensation layer (10) and/or of the optically transparent, double-sidedly adhesive film preferably comprises the following step:
- severing the compensation layer (10) and/or the optically transparent, double-sidedly adhesive film between the part to be removed and the remaining part, preferably by laser cutting,
- lifting off the part of the compensation layer (10) and/or of the optically transparent, double-sidedly adhesive film that is to be removed.

6. Production method according to one or more of the preceding claims, wherein the thin glass pane (1) has a thickness at right angles to the areal extent of between 2 millimetres and 0.1 millimetre, and wherein the thick glass pane (6) has a thickness at right angles to the areal extent of between 2 millimetres and 20 mm.

7. Production method according to one or more of the preceding claims, wherein the arrangement comprises a vacuum press having an elastic and airtight membrane cover that can be arranged above the glass panes (1, 6), and the rest, wherein the introduction into the arrangement comprises the following steps:
- applying the air-tight elastic membrane cover to the glass panes (1, 6) and the rest, so as to form a closed cavity between rest and membrane cover that encloses the glass panes (1, 6),
- generating a reduced pressure within the cavity with an air pressure of less than 100 mbar, preferably less than 25 mbar, such that the thick glass pane (6) is pressed onto the thin glass pane (1) by the membrane and the adhesive is preferably distributed uniformly.

8. Production method according to one or more of the preceding claims,
wherein the reduced pressure is switched on at a time between a tenth of the pot life of the adhesive and a quarter of the pot life of the adhesive and is switched off on attainment of the pot life of the adhesive.

9. Production method according to one or more of the preceding claims,
wherein the vibrations have a frequency between 50 Hz and 20 kHz and are preferably varied over time, where the vibrations are preferably employed until the adhesive has cured.

10. Production method according to one or more of the preceding claims, further comprising exposing of the optical function onto the master hologram layer (8), preferably after the adhesive has cured.

11. Production method according to one or more of the preceding claims, wherein the master hologram layer comprises a photopolymer.

12. Master plate produced according to one or more of the preceding claims.

13. Master plate for industrial hologram replication, comprising a flat and two-dimensional composite pane having a thick glass pane (6) as carrier for minimization of bending of the master plate and
a thin glass pane (1) for protection of a master hologram layer from mechanical influences and
at least one master hologram layer (8) between the glass panes, which includes the optical function of a hologram, wherein the thick glass pane (6) has a thickness at right angles to the areal extent of greater than 2 millimetres, wherein the thin glass pane (1) has a thickness at right angles to the areal extent of between 2 millimetres and 0.1 millimetre,
wherein
the composite pane further comprises at least one layer (7) of an adhesive between the thick glass pane (6) and the thin glass pane (1), **characterized in that** the thickness of the adhesive layer is 100 µm to 200 µm.

14. Master plate according to the preceding Claim 13, **characterized in that**
the master hologram layer (8) has a thickness between 1 µm and 200 µm, preferably between 5 µm and 50 µm.

15. Master plate according to the preceding Claim 13 or 14,
**characterized in that**
the composite pane further comprises a transparent, double-sidedly adhesive film and/or
a carrier film for the master hologram layer.

## Revendications

1. Procédé de fabrication d'une plaque maîtresse comprenant un carreau composite plan et plat, comprenant les étapes suivantes :
- application d'une première couche d'une épaisseur homogène (3), qui comprend au moins une couche d'hologramme maître (8), sur une première face (2) d'une vitre mince plate (1), une zone extérieure (4) sur les bords latéraux de la vitre mince (1) restant exempte de la première couche (3), la couche d'hologramme maître (8) étant adaptée pour présenter une fonction optique d'un hologramme
- application d'éléments d'écartement (5) sur la première face (2) dans la zone extérieure (4), les éléments d'écartement (5) étant mis au point pour maintenir les bords extérieurs et/ou latéraux d'une vitre épaisse plate (6) à appliquer et de la vitre mince (1) à une distance définie au préalable pendant le processus de fabrication,
- application de la vitre épaisse (6) de manière congruente sur la première face de la vitre mince (2) avec une couche adhésive (7) intercalée, la vitre épaisse (6) présentant les mêmes dimensions de surface que la vitre mince (1),
- introduction des deux vitres (1, 6) dans un ensemble comprenant un module sous vide et un module de vibration, l'ensemble étant mis au point pour presser mutuellement les vitres (1, 6) et pour distribuer uniformément l'adhésif dans la mesure souhaitée par génération de dépression et de vibrations,
- durcissement de l'adhésif.

2. Procédé de fabrication selon la revendication précédente, la couche d'hologramme maître (8) étant appliquée sensiblement sur toute la surface sous forme d'un matériau liquide
ou
la couche d'hologramme maître (8) comprenant un film de support, la couche d'hologramme maître (8) présentant de manière préférée déjà la fonction optique avant l'application.

3. Procédé de fabrication selon l'une des revendications précédentes, , un film optiquement transparent adhésif des deux côtés étant appliqué sur la première face (2) de la vitre mince (1) avant l'application de la première couche (3) d'abord sur sensiblement toute la surface, la zone extérieure (4) restant de manière préférée exempte du film au moins par endroits sur les bords latéraux.

4. Procédé de fabrication selon une ou plusieurs des revendications précédentes, la première couche comprenant la couche d'hologramme maître (8) disposée dans une zone centrale espacée des bords latéraux de la vitre mince (1) et comprenant une couche de compensation (10) avec la même épaisseur que la couche d'hologramme maître (8) dans une zone de bord entre la zone extérieure (4) et la couche d'hologramme maître (8) restant exempte de l'hologramme maître, la couche de compensation (10) comprenant de manière préférée un film.

5. Procédé de fabrication selon l'une ou plusieurs des revendications précédentes 3 ou 4,
la couche de compensation (10) et/ou le film optiquement transparent adhésif des deux côtés étant d'abord appliqués sur une zone de bord complète et étant ensuite retirés de nouveau dans la zone extérieure (4) et/ou
la couche de compensation (10) étant appliquée après la couche d'hologramme maître (8),
la couche de compensation (10) étant également appliquée sur la couche d'hologramme maître (8) et étant ensuite retirée à nouveau à cet endroit,
de préférence, une étape du retrait d'une partie de la couche de compensation (10) et/ou du film optiquement transparent adhésif des deux côtés comprenant l'étape suivante :
- séparation de la couche de compensation (10) et/ou du film optiquement transparent adhésif des deux côtés entre la partie à retirer et la partie restante, de préférence par découpe laser
- décollement de la partie de la couche de compensation (10) à retirer et/ou du film optiquement transparent adhésif des deux côtés.

6. Procédé de fabrication selon une ou plusieurs des revendications précédentes, la vitre mince (1) comportant une épaisseur perpendiculairement à l'extension de surface comprise entre 2 millimètres et 0,1 millimètre et la vitre épaisse (6) comportant une épaisseur perpendiculairement à l'extension de surface comprise entre 2 millimètres et 20 mm.

7. Procédé de fabrication selon l'une ou plusieurs des revendications précédentes, l'ensemble comprenant une presse à vide avec une couverture de membrane élastique et étanche à l'air pouvant être disposée au-dessus des vitres (1, 6), et le support, l'introduction dans l'ensemble comprenant des étapes suivantes :
- placement du couvercle de membrane élastique étanche à l'air sur les vitres (1, 6) et le support de manière à créer une cavité fermée entre le support et le couvercle de membrane, laquelle renferme les vitres (1, 6)
- génération d'un vide à l'intérieur de la cavité avec une pression d'air inférieure à 100 mbar, de manière préférée inférieure à 25 mbar, de telle sorte que la vitre épaisse (6) est pressée à travers la membrane sur la vitre mince (1) et que l'adhésif est de préférence réparti uniformément.

8. Procédé de fabrication selon l'une ou plusieurs des revendications précédentes,
le vide ou la dépression étant activé(e) à un moment compris entre un dixième de la durée de vie de pot de l'adhésif et un quart de la durée de vie de pot de l'adhésif et étant coupé(e) lorsque la durée de vie de pot de l'adhésif est atteinte.

9. Procédé de fabrication selon l'une ou plusieurs des revendications précédentes,
les vibrations comportant une fréquence comprise entre 50 Hz et 20 kHz et variant de manière préférée dans le temps, les vibrations étant appliquées de préférence jusqu'au durcissement de l'adhésif.

10. Procédé de fabrication selon l'une ou plusieurs des revendications précédentes, comprenant par ailleurs l'exposition de la fonction optique sur la couche d'hologramme maître (8), de préférence après le durcissement de l'adhésif.

11. Procédé de fabrication selon une ou plusieurs des revendications précédentes, la couche d'hologramme maître comprenant un photopolymère.

12. Plaque maîtresse fabriquée selon l'une ou plusieurs des revendications précédentes.

13. Plaque maîtresse pour la réplication industrielle d'hologrammes,
comprenant un carreau composite plan et plat avec une vitre épaisse (6) en tant qu'élément porteur pour minimiser la flexion de la plaque maîtresse et
une vitre mince (1) destinée à protéger une couche d'hologramme maître contre les influences mécaniques ainsi
qu'au moins une couche d'hologramme maître (8) située entre les vitres, laquelle contient la fonction optique d'un hologramme,
la vitre épaisse (6) comportant une épaisseur perpendiculairement à l'extension de la surface supérieure à 2 millimètres,
la vitre mince (1) comportant une épaisseur perpendiculairement à l'extension de la surface comprise entre 2 millimètres et 0,1 millimètre,
le carreau composite comprenant par ailleurs au moins une couche (7) d'un adhésif entre la vitre épaisse (6) et la vitre mince (1), **caractérisée en ce que** l'épaisseur de la couche adhésive va de 100 µm à 200 µm.

14. Plaque maîtresse selon la revendication précédente 13,
**caractérisée en ce que**
la couche d'hologramme maître (8) comporte une épaisseur entre 1 µm et 200 µm, de manière préférée entre 5 µm et 50 µm.

15. Plaque maîtresse selon la revendication 13 ou 14, **caractérisée en ce que**
le carreau composite comprend par ailleurs un film transparent adhésif des deux côtés et/ou un film porteur pour la couche d'hologramme maître.
